(19) Europäisches Patentamt

European Patent Office

Office européen des brevets

(11) Veröffentlichungsnummer: **0 260 385 B1**

## EUROPÄISCHE PATENTSCHRIFT

(45) Veröffentlichungstag der Patentschrift: **27.02.91**

(51) Int. Cl.⁵: **G01P 5/00**

(21) Anmeldenummer: **87108851.4**

(22) Anmeldetag: **20.06.87**

(54) **Vorrichtung zur Messung von Strömungsvektoren in Gasströmungen.**

(30) Priorität: **19.09.86 DE 3631901**

(43) Veröffentlichungstag der Anmeldung:
**23.03.88 Patentblatt 88/12**

(45) Bekanntmachung des Hinweises auf die
Patenterteilung:
**27.02.91 Patentblatt 91/09**

(84) Benannte Vertragsstaaten:
**DE FR GB**

(56) Entgegenhaltungen:
**GB-A- 2 109 548**
**US-A- 3 941 477**

**REVIEW OF SCIENTIFIC INSTRUMENTS, Band
56, Nr. 11, November 1985, Seiten 2025-2029,
American Institute of Physics, Woodbury,
New York, US; N. NAKATANI et al.: "Laser
doppler velocimetry using polarizationpreserving optical fibers for simultaneous
measurement of multidimensional velocity
components"**

(73) Patentinhaber: **Deutsche Forschungsanstalt
für Luft- und Raumfahrt e.V.
Linder Höhe Postfach 90 60 58
D-5000 Köln 90(DE)**

(72) Erfinder: **Schodl, Richard, Dr.
Rembrandstrasse 65
D-5210 Troisdorf-Eschmar(DE)**

(74) Vertreter: **Selting, Günther, Dipl.-Ing. et al
Deichmannhaus am Hauptbahnhof
D-5000 Köln 1(DE)**

**Beschreibung**

Die Erfindung betrifft eine Vorrichtung zur Messung von Strömungsvektoren in Gasströmungen nach dem Oberbegriff des Patentanspruchs 1.

DE-PS 24 49 358 beschreibt eine optische Vorrichtung, bei der ein von einer Lichtquelle ausgehender Lichtstrahl in zwei Teilstrahlen aufgeteilt wird, von denen jeder im Meßvolumen fokussiert wird. Wenn ein in der Strömung enthaltendes Festkörperteilchen eine Fokussierungsstelle passiert, leuchtet es auf. Dieses Aufleuchten wird von einer Auswertevorrichtung erkannt. Ein Teilchen, dessen Strömungsvektor mit derjenigen Geraden übereinstimmt, die durch beide Fokussierungsstellen hindurchgeht, erzeugt an der ersten Fokussierungsstelle einen Startimpuls und an der zweiten Fokussierungsstelle einen Stopimpuls. Aus dem zeitlichen Abstand dieser beiden Impulse kann die Strömungsgeschwindigkeit, also der Betrag des Vektors, er kannt werden. Dieses Zwei-Fokus-Verfahren erfordert einen großen zeitlichen Meßaufwand. Ferner können nur diejenigen Komponenten von Strömungsvektoren gemessen werden, die in einer senkrecht zur optischen Achse des Systems verlaufenden Ebene liegen. Die Ebene muß durch eine Meßreihe ermittelt werden. Die parallel zur optischen Achse verlaufende Komponente kann nicht bestimmt werden.

DE-PS 31 45 987 beschreibt eine Weiterbildung des genannten Zwei-Fokus-Verfahrens, bei der auch eine Messung derjenigen Komponente eines Strömungsvektors möglich ist, die parallel zur optischen Achse des Systems verläuft, so daß die Strömungsvektoren vollständig nach Betrag und Richtung erfaßt werden können. Bei diesem Verfahren, das als Drei-Komponenten-Verfahren bezeichnet wird, wird ein mehrfarbiger Laserstrahl in zwei verschiedenfarbige Komponenten zerlegt. Jede dieser Komponenten wird in zwei Teilstrahlen aufgespalten, die senkrecht zueinander polarisiert sind. Auf diese Weise entstehen insgesamt vier Teilstrahlen, von denen sich jeweils zwei Teilstrahlen im Meßvolumen schneiden und eine Fokussierungsstelle bilden. Die eine Fokussierungsstelle liegt auf der optischen Achse des Systems. Durch Drehen eines Bilddrehprismas kann die Position der anderen Fokussierungsstelle auf einfache Weise verändert werden. Zur Auswertung der von den strömenden Teilchen erzeugten Lichtblitze wird die Strahlung dieser Lichtblitze nach Polarisation und Farbe selektiert, um die Start- und Stopimpulse zu erzeugen.

Sowohl bei dem Zwei-Komponenten-Verfahren als auch bei dem Drei-Komponenten-Verfahren ist der Abstand der Fokussierungsstellen abhängig von dem verwendeten Strahlenteiler, der aus dem Laserstrahl zwei verschiedenfarbige Teilstrahlen erzeugt. Dieser Strahlenteiler ist ein Rochon-Prisma, das erforderlichenfalls ausgewechselt werden kann. Bei dem Drei-Komponenten-Verfahren muß zusätzlich ein eine Lochblende enthaltender Umlenkspiegel ausgerichtet werden, der Löcher für den Durchlaß der zwei verschiedenfarbigen Laserstrahlen aufweist und die rücklaufenden Lichtstrahlen reflektiert, um sie seitlich aus dem optischen System herauszuführen. Es hat sich herausgestellt, daß die Meßzeit erheblich verkürzt werden kann, wenn der Abstand der Fokussierungsstellen im Meßvolumen auf die Strömungsturbulenzen abgestimmt ist. Derartige Veränderungen des Strahlabstandes erfordern bei den bekannten Vorrichtungen jedoch einen erheblichen Montage- und Justieraufwand, der nicht während einer Meßkampagne durchgeführt werden kann.

Der Erfindung liegt die Aufgabe zugrunde, eine Vorrichtung nach dem Oberbegriff des Patentanspruchs 1 derart weiterzubilden, daß ohne Eingriff in das optische System unterschiedliche Strahlabstände im Meßvolumen realisierbar sind.

Die Lösung dieser Aufgabe erfolgt erfindungsgemäß mit den Merkmalen des kennzeichnenden Teils des Patentanspruchs 1.

Bei der erfindungsgemäßen Vorrichtung wird ein mehrfarbiger Laserstrahl von der Dispersionsvorrichtung in mehrere verschiedenfarbige Teilstrahlen zerlegt, deren Fokussierungsstellen gegenseitige Abstände haben. Aus der Vielzahl verschiedenfarbiger Teilstrahlen können zwei beliebige Teilstrahlen für die Erzeugung der Start- und Stopimpulse selektiert werden. Vorzugsweise haben die Fokussierungsstellen der einzelnen Farben ungleiche Abstände voneinander. Auf diese Weise kann durch geeignete Wahl von Kombinationen zweier Fokussierungsstellen der Strahlabstand beispielsweise über zehn etwa gleiche Stufen variiert werden. Die verschiedenen Strahlen können durch Farbaufspaltung des Laserstrahls eines Gaslasers (z.B. eines $Ar^+$-Lasers), der im Viellinienbetrieb arbeitet, erzeugt werden. Die erfindungsgemäße Vorrichtung arbeitet nach einem Vielfarben-Verfahren. Die Erfindung eignet sich sowohl für das Zwei-Komponenten-Verfahren als auch für das Drei-Komponenten-Verfahren.

Die Erfindung ermöglicht es, aus den jeweils vorhandenen Strahlen jede beliebige Kombination von zwei Strahlen auszuwählen, während die anderen Strahlen unbenutzt bleiben. Auf diese Weise kann der Abstand der Fokussierungsstellen ohne Eingriff in das optische System verändert werden. Dies ermöglicht es, Messungen in turbulenten Strömungen mit dem jeweils günstigsten Strahlabstand (Abstand der Fokussierungsstellen) durchzuführen. Dabei ist zu berücksichtigen, daß ein großer Strahlabstand grundsätzlich genauere Messungen von Betrag und Richtung eines Strömungsvektors ermöglicht, daß sich aber in turbulenten Strömungen die Strömungsvektoren in so kurzen Abständen ändern, daß die Meßstrecke (der Abstand zwischen den beiden Fokussierungsstellen) verkürzt werden muß.

Ein besonderer Vorteil besteht darin, daß die Dispersionsvorrichtung, die die Strahlenaufteilung vornimmt, in beiden Richtungen benutzt werden kann. Die verschiedenfarbigen rücklaufenden Strahlen werden von der Dispersionsvorrichtung zu einem einzigen Strahl zusammengefaßt, der anschließend in der Lichtaufnahmevorrichtung wieder in seine Farbkomponenten zerlegt werden kann. Durch eine Umschalteinrichtung können die beiden interessierenden Farbkomponenten selektiert und der Auswertevorrichtung zugeführt werden. Zur Änderung der Vektorrichtung braucht lediglich die Dispersionsvorrichtung um die optische Achse des Systems gedreht zu werden. Alternativ ist es möglich, die Dispersionsvorrichtung zusammen mit anderen optischen Komponenten in einem rohrförmigen Meßkopf unterzubringen, der insgesamt um seine Längsachse drehbar ist. Durch diese Maßnahme wird erstens erreicht, daß der optische Teil der Vorrichtung kleinformatig ausgeführt werden kann, so daß Messungen auch an schwer zugänglichen, kleinen Strömungskanälen möglich werden, und zweitens kann beim 3-Komponenten-Verfahren auf das voluminöse, Störstrahl produzierende Bilddrehprisma verzichtet werden, wodurch Strömungsmessungen auch in Wandnähe von Strömungskanälen möglich sind.

Im folgenden werden unter Bezugnahme auf die Zeichnungen Ausführungsbeispiele der Erfindung näher erläutert.

Es zeigen:

Fig. 1    eine schematische Seitenansicht des optischen Systems einer Meßvorrichtung, die nach dem Zwei-Komponenten-Verfahren arbeitet,

Fig. 2    eine Draufsicht der Vorrichtung von Figur 1,

Fig. 3    eine schematische Darstellung der Lichtaufnahmevorrichtung und der Auswertevorrichtung,

Fig. 4    eine schematische Seitenansicht einer nach dem Drei-Komponenten-Verfahren arbeitenden Vorrichtung,

Fig. 5    eine Draufsicht der Vorrichtung nach Figur 4 und

Fig. 6    in ähnlicher Darstellung wie Figur 4 den Aufbau einer modifizierten Vorrichtung.

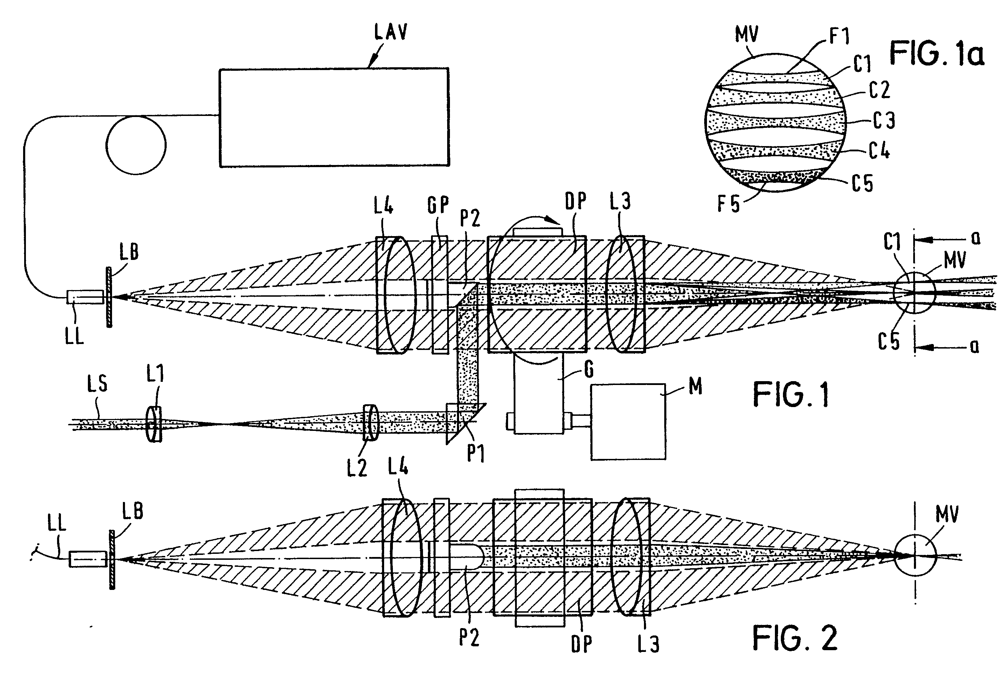

Gemäß Fig. 1 wird der Laserstrahl eines Lasers, z.B. eines $Ar^+$-Ionen-Lasers, der im Vielfarbenbetrieb arbeitet, durch die beiden Linsen L1 und L2 aufgeweitet und durch das Prisma P1 rechtwinklig abgelenkt. An einer Glasplatte GP ist ein weiteres Prisma P2 entlang der optischen Achse der Linsensysteme L3 und L4 angeordnet, das den vom Prisma P1 ausgesandten Laserstrahl empfängt und diesen Laserstrahl entlang der optischen Achse weiterleitet. Auf diese Weise wird der Laserstrahl in die optische Achse des Systems eingespiegelt. Zwischen dem Prisma P2 und dem ersten Linsensystem L3 ist ein Dispersionsprisma DP (z.B. Typ Amiciprisma) angeordnet, das über ein Getriebe G von einem Motor M um die optische Achse herum drehbar ist. Im Dispersionsprisma DP erfahren die einzelnen Farben C1 bis C5 des vielfarbigen Laserstrahls unterschiedliche Winkelabweichungen, so daß nach Fokussierung durch die akromatische Linse L3 im Meßvolumen MV verschiedenfarbige Strahlen mit zueinander parallelen Achsen abgebildet werden, wobei die Fokussierungsstellen F1 bis F5 entlang einer gemeinsamen Achse liegen, die in Richtung des zu messenden Strömungsvektors verläuft. Fig. 1a zeigt eine Ansicht des Meßvolumens MV aus Richtung der Pfeile a-a von Figur 1. Die Abstände der Strahlen C1 bis C5 untereinander sind verschieden und hängen von der Art des verwendeten Lasers ab. Für das Beispiel eines $Ar^+$-Ionen-Lasers sind die Wellenlängen der einzelnen Farben: 514 nm, 496 nm, 488 nm, 476 nm und 465 nm. Die gegenseitigen Abstände der Fokussierungsstellen entsprechen den Abständen zwischen diesen Wellenlängen und sind ungleichmäßig.

Wird die Ebene, in der die Teilstrahlen liegen, parallel zur Strömungsrichtung ausgerichtet, so erzeugt ein Teilchen, das durch alle Strahlen fliegt, fünf aufeinanderfolgende Streulichtimpulse. Dieses Streulicht wird von dem äußeren Bereich der ersten Linse L3 gesammelt und parallel gerichtet. Beim Durchgang durch das für die Sende- und Empfangsstrahlen gemeinsame Dispersionsprisma DP wird das Streulicht von den im Meßvolumen separierten verschiedenfarbigen Strahlen zu einem einzigen gemeinsamen Parallelstrahl zusammengefaßt und dann durch die zweite Linse L4 in einem einzigen Punkt von etwa 10 μm Durchmesser abgebildet. In diesem Punkt befindet sich das Loch einer Lochblende LB, hinter der der Einlaß eines Lichtleiters LL angeordnet ist. Der einfallende Laserstrahl LS wird also entlang der optischen Achse des Systems in dieses eingespiegelt, während der rücklaufende Strahl den einfallenden Strahl umgibt und bis zum Lichtleiter LL ausschließlich um die optische Achse herum verläuft.

Wird mittels des Motors M das Dispersionsprisma DP um die optische Achse herum gedreht, so verstellt sich die Ebene der Parallelstrahlen im Meßvolumen MV. Selbst bei nicht exakter Achsenausrichtung des Dispersionsprismas DP wird in jeder Drehstellung das beobachtete Streulicht an genau derselben Stelle in der Lochblendenebene abgebildet. Eine Nachjustierung der Lochebene ist daher nicht erforderlich.

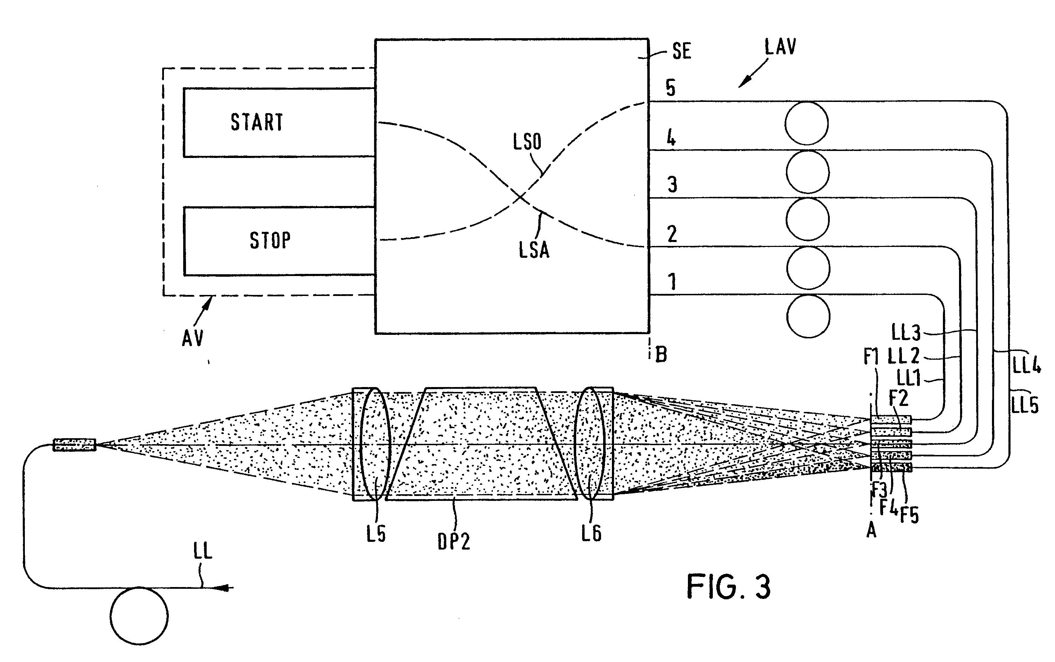

Der Lichtleiter LL ist Bestandteil der in Fig. 3 dargestellten Lichtaufnahmevorrichtung LAV. Aus dem Lichtleiter LL tritt ein divergenter vielfarbiger Lichtstrahl aus, der durch die Linse L5 parallelgerichtet wird. Durch ein zweites Dispersionsprisma DP2 oder ein Strichgitter erfahren die verschieden Farben unterschiedliche Ablenkungen. Dem Dispersionsprisma DP2 ist eine Linse L6 nachgeschaltet. In der Brennebene A dieser Linse L6 werden die einzelnen Farben F1 bis F5 an verschiedenen Orten fokussiert. Von diesen Fokussierungsstellen führen weitere Lichtleiter LL1 bis LL5 zu den Eingängen einer Schalteinrichtung SE. An die Schalteinrichtung SE ist die Auswerteeinrichtung AV angeschlossen, die einen Startimpulsgeber START und einen Stopimpulsgeber STOP enthält. Innerhalb der Schalteinrichtung SE kann über einen Lichtleiter LSA der Startimpulsgeber START und der Stopimpulsgeber STOP an jeden der Lichtleiter LL1 bis LL5 angeschlossen werden, so daß die Start- und Stopimpulse von beliebigen Kombinationen der Teilstrahlen ausgelöst werden können.

Alternativ besteht die Möglichkeit, in der Brennebene A Fotodetektoren anzuordnen, die elektrische Signale er zeugen, wenn sie von einem Lichtstrahl der betreffenden Farbe getroffen werden. In diesem Fall ist die Schalteinrichtung SE keine optische sondern eine elektrische Schalteinrichtung, an deren Eingang die den einzelnen Farben entsprechenden Impulse bereitgestellt werden und an der diejenigen Impulse, die der Auswertevorrichtung AV zugeführt werden, selektierbar sind.

Da die Strahlen im Meßvolumen MV unterschiedliche Farben haben, ergibt sich eine verbesserte Trennschärfe des Streulichts von den Einzelstrahlen. Ein wesentlicher Vorteil besteht darin, daß nur ein einziges rotierendes optisches Bauteil, nämlich das Dispersionsprisma DP benötigt wird. Ebenfalls wird nur eine einzige Lochblende LB benötigt, wodurch die Raumfilterung verbessert wird. Das Dispersionsprisma DP wird sowohl für den Sendestrahl als auch für die Empfangsstrahlen gleichermaßen benutzt.

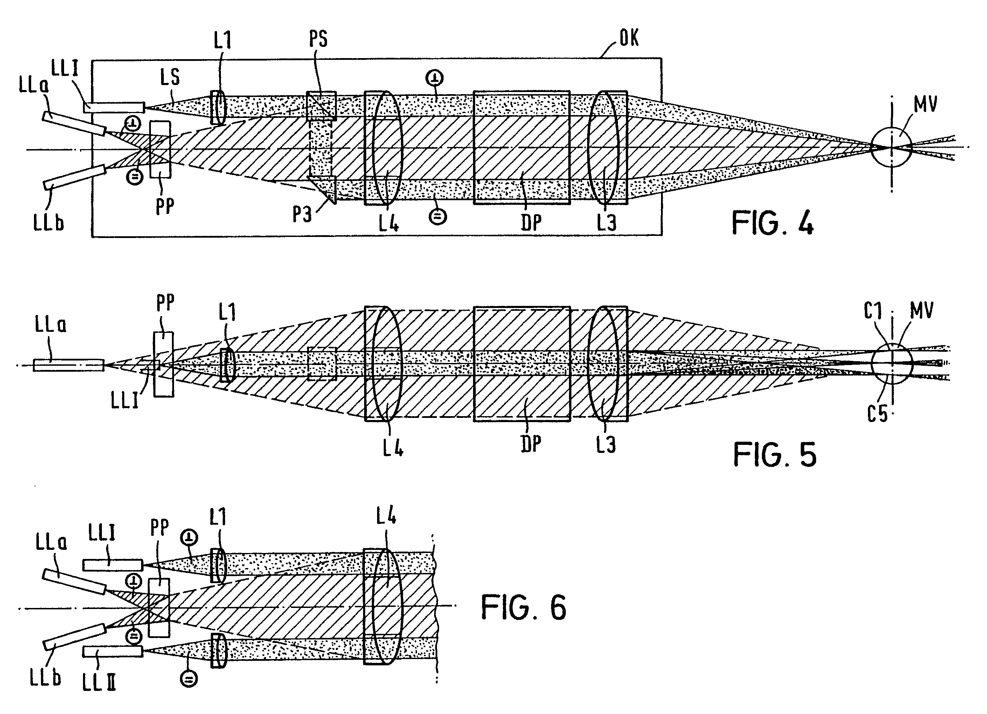

Vorstehend wurde ein Zwei-Komponenten-Meßsystem beschrieben, das von seiner Funktion her im wesentlichen demjenigen der DE-PS 24 49 358 entspricht. Im folgenden wird unter Bezugnahme auf die Figuren 4 und 5 ein Drei-Komponenten-System beschrieben, das in seiner Funktion im wesentlichen demjenigen der DE-PS 31 45 987 entspricht.

Gemäß Fig. 4 wird ein mehrfarbiger Laserstrahl LS, der über einen polarisationserhaltenden "single mode"-Lichtleiter LLI zugeführt wird, von einer Linse L1 parallel gerichtet. In einem Polarisationsstrahlenteiler PS erfolgt eine Aufteilung in vertikal und horizontal polarisierte Strahlen. Der vertikal polarisierte Strahl wird geradlinig weitergeleitet, während der horizontal polarisierte Strahl rechtwinklig abgeleitet und einem Prisma P3 zugeführt wird, das diesen Strahl parallel zu dem vertikal polarisierten Strahl ausrichtet. Beide Strahlen werden parallel zur und im Abstand von der optischen Achse dem Dispersionsprisma DP zugeführt und anschließend über die erste Linse L3 auf das Meßvolumen MV fokussiert. Die sich im Meßvolumen MV in verschiedenen Punkten kreuzenden Strahlen haben in jedem Punkt jeweils gleiche Farbe, aber unterschiedliche Polarisationsrichtungen. Das verschiedenfarbige Streulicht wird im Dispersionsprisma DP wieder in einem Strahl zusammengefaßt, der auf der optischen Achse verläuft und von der zweiten Linse L4 fokussiert wird. Im Ausgangsstrahlenweg der Linse L4 befindet sich ein Polarisationsprisma PP, in welchem der Strahl in zwei zueinander senkrecht polarisierte Anteile aufgespalten wird. Jede dieser beiden Komponenten ist auf den Einlaß eines Lichtleiters LLa und LLb fokussiert. Jede dieser Komponenten enthält die Information der verschiedenen Streulichtfarben, die in der nachgeschalteten Lichtaufnahmevorrichtung wieder getrennt werden, ist aber eindeutig jeweils den zueinander senkrecht polarisierten Strahlen zugeordnet.

Die Linse L4 weist in ihrem Randbereich Öffnungen für den ungehinderten Durchgang der auf das Meßvolumen MV gerichteten Laserstrahlen auf. Die Linsen L1, L4 und L3 sowie der Polarisationsstrahlenteiler PS und das Dispersionsprisma DP sind in einem rohrförmigen optischen Kopf OK untergebracht, der insgesamt gedreht werden kann, so daß es nicht erforderlich ist, das Dispersionsprisma DP in bezug auf die übrigen Komponenten zu drehen. Der jeweilige Drehwinkel des optischen Kopfs OK kann abgelesen werden.

Auch bei dem Ausführungsbespiel nach Figur 4 werden im Meßvolumen MV mehrere räumlich voneinander getrennte Farben C1 bis C5 erzeugt, die entlang einer gemeinsamen Geraden angeordnete Fokussierungsstellen bilden.

Figur 6 zeigt eine abgewandelte Ausführungsform, bei der zwei senkrecht zueinander polarisierte Laserstrahlen durch die Lichtleiter LLI und LLII parallel und im Abstand zur optischen Achse des Systems zugeführt werden. In diesem Fall sind der Polarisationsstrahlenteiler PS und das Prisma P3 von Figur 4 nicht erforderlich. Andererseits müssen die Lichtleiter LLI und LLI polarisationserhaltende Lichtleiter sein.

## Ansprüche

1. Vorrichtung zur Messung von Strömungsvektoren in Gasströmungen, mit einer Laser-Lichtquelle zur Erzeugung eines mehrfarbigen La-serstrahles, einem nachgeschalteten Strahlent-eiler zur Erzeugung von räumlich getrennten Teilstrahlen unterschiedlicher, Farben, einem ersten Linsensystem (L3), das die von dem Strahlenteiler ausgehenden Teilstrahlen unterschiedlicher Farben in einem Meßvolumen (MV) an nebeneinanderliegenden Stellen fokussiert, einem zweiten Linsensystem (L4), das das Licht des Meßvolumens (MV) einer Lichtaufnahmevorrichtung (LAV) zuführt, welche das aus dem Meßvolumen (MV) empfangene Licht in räumlich getrennte Komponenten zerlegt, deren Farben denjenigen der Teilstrahlen entsprechen, und mit einer an die Lichtaufnahme-vorrichtung (LAV) angeschlossenen Auswerte-vorrichtung (AV), die einen Startimpuls erzeugt, wenn ein Teilchen die Fokussierungsstelle eines Teilstrahls passiert, und einen Stopimpuls erzeugt, wenn dasselbe Teilchen anschließend die Fokussierungsstelle eines anderen Teilstrahls passiert,

**dadurch gekennzeichnet,**

daß der Strahlenteiler eine Dispersionsvorrichtung (DP) ist, die das Laserlicht in mindestens drei Teilstrahlen mit unterschiedlichen Farben (F1-F5) aufspaltet die unterschiedlicher Fokussierungsstellen haben, die im wesentlichen auf einer gemeinsamen Geraden liegen, und daß zur Erzeugung der Start- und Stopimpulse un-terschiedliche Paare von Komponenten aus-wählbar und der Auswertevorrichtung (AV) zuführbar sind.

2. Vorrichtung nach Anspruch 1, dadurch gekennzeichnet, daß die Dispersionsvorrichtung (DP) in der einen Richtung von den zum Meßvolumen (MV) hinlaufenden Teilstrahlen und in der anderen Richtung von den vom Meßvolumen (MV) zur Lichtaufnahmevorrichtung (LAV) laufenden Strahlen durchlaufen wird.

3. Vorrichtung nach Anspruch 1 oder 2, dadurch gekennzeichnet, daß die Dispersionsvorrichtung (DP) um ihre optische Achse drehbar ist.

4. Vorrichtung nach einem der Ansprüche 1 bis 3, dadurch gekennzeichnet, daß durch einem Polarisationsstrahlenteiler (PS) der Disper-sionsvorrichtung (DP) Laserstrahlen unter-schiedlicher Polarisierung zugeführt werden und daß im Lichtweg hinter dem zweiten Lin-sensystem (L4) ein weiterer Polarisationsstrahl-enteiler (PP) angeordnet ist, der das aus dem Meßvolumen (MV) empfangene Licht zwei Lichtleitern (LLa, LLb) zuführt.

5. Vorrichtung nach einem der Ansprüche 1 bis 4, dadurch gekennzeichnet, daß der Einlaß der Lichtaufnahmevorrichtung (LAV), das zweite Linsensystem (L4), die Dispersionsvorrichtung (DP) und das erste Linsensystem (L3) in dieser Reihenfolge entlang der optischen Achse angeordnet sind.

6. Vorrichtung nach einem der Ansprüche 1 bis 5, dadurch gekennzeichnet, daß das zweite Linsensystem (L4) im Abstand von der opti-schen Achse Durchtrittsöffnungen für unter-schiedlich polarisierte Strahlen aufweist.

7. Vorrichtung nach Anspruch 5 oder 6, dadurch gekennzeichnet, daß die entlang der optischen Achse angeordneten Komponenten (L4,DP,L3) in einem um die optische Achse drehbaren Gehäuse (OK) untergebracht sind.

8. Vorrichtung nach Anspruch 5, dadurch gekennzeichnet, daß eine Vorrichtung (Ll,L2,P2) zum Einspiegeln des Laserlichts in den Strahlenweg zwischen dem zweiten Linsensystem (L4) und der Dispersionsvorrichtung (DP) vorgesehen ist.

**Claims**

1. Apparatus for measuring flow vectors in gas streams, comprising a laser light source for generating a multicolored laser beam, a subsequently positioned beam divider for generating spatially separated partial beams of different colors, a first lens system (L3) focusing at juxtaposed points in a measuring volume (MV) the partial beams of different colors emitted from the beam divider, a second lens system (L4) for passing the light of the measuring volume (MV) to a light receiving means (LAV) which splits the light received from the measuring volume (MV) into spatially separate components, and an evaluating means (AV) connected to the light receiving means (LAV) and producing a start pulse if a particle passes the focusing point of a partial beam and producing a stop pulse if the same particle subsequently passes the focusing point of another partial beam,

**characterized in that**

the beam divider is a dispersion means (DP) splitting the laser light into at least three partial beams of different colors (F1-F5) having different focusing points lying substantially on a common straight line, and that, for the production of start and stop pulses, different pairs of components may be selected and supplied to the evaluating means (AV).

2. Apparatus according to claim 1, characterized in that, in one direction, the partial beams running to the measuring volume (MV) pass the dispersion means (DP), while, in the other direction, the same dispersion means is passed by the beams running from the measuring volume (MV) to the light receiving means (LAV).

3. Apparatus according to claim 1 or 2, characterized in that the dispersion means (DP) is rotatable about its optical axis.

4. Apparatus according to one of claims 1 to 3, characterized in that laser beams of different polarization are supplied to the dispersion means (DP) by a polarization beam divider (PS), and that behind the second lens system (L4), a further polarization beam divider (PP) is provided in the light path, which supplies the light received from the measuring volume (MV) to two light guides (LLa, LLb).

5. Apparatus according to one of claims 1 to 4, characterized in that the inlet of the light receiving means (LAV), the second lens system (L4), the dispersion means (DP) and the first lens system (L3) are arranged in this order along the optical axis.

6. Apparatus according to one of claims 1 to 5, characterized in that the second lens system (L4) comprises at a distance from the optical axis apertures for the passage of differently polarised beams.

7. Apparatus according to claim 5 or 6, characterized in that the components (L4, DP, L3) positioned along the optical axis, are accomodated in a common housing (OK) rotatable about the optical axis.

8. Apparatus according to claim 5, characterized by the provision of a device (L1, L2, P2) for mirroring the laser light into the beam path between the second lens system (L4) and the dispersion means (DP).

**Revendications**

1. Dispositif pour mesurer des vecteurs d'écoulement dans des écoulements de gaz, comportant une source lumineuse laser pour produire un faisceau laser multicolore, un diviseur de faisceau, monté en aval, pour produire des faisceaux partiels, séparés dans l'espace, de différentes couleurs, un premier système de lentilles (13) qui focalise dans un volume de mesure (MV), en des positions situées l'une à côté de l'autre, les faisceaux partiels, de différentes couleurs, sortant du diviseur de faisceau, un second système de lentilles (L4) qui amène la lumière du volume de mesure (MV) à un dispositif de réception de la lumière (LAV) qui décompose la lumière, reçue en provenance du volume de mesure (MV), en composantes qui sont séparées dans l'espace et dont les couleurs correspondent à chacun des faisceaux partiels, et comportant un dispositif de traitement (AV) qui est relié au dispositif de réception de la lumière (LAV), qui produit une impulsion de démarrage lorsqu'une particule passe à la position de focalisation d'un faisceau partiel et qui produit une impulsion d'arrêt lorsque la même particule passe ensuite à la position de focalisation d un autre faisceau partiel,

caractérisé par le fait que le diviseur de faisceau est un dispositif de dispersion (DP) qui partage la lumière laser en au moins trois faisceaux partiels (F1-F5) de couleurs différentes, qui ont des positions de focalisation différentes qui se situent sensiblement sur une droite commune, et par le fait que, pour produire les impulsions de démarrage et d'arrêt, on peut choisir différentes paires de composantes et les amener au dispositif de traitement (AV).

2. Dispositif selon la revendication 1, caractérisé par le fait que le dispositif de dispersion (DP) est parcouru, dans une première direction, par les faisceaux partiels qui vont en direction du volume de mesure (MV) et, dans l'autre direction, par les faisceaux qui vont du volume de mesure (MV) au dispositif de réception de la lumière (LAV).

3. Dispositif selon la revendication 1 ou 2, caractérisé par le fait que l'on peut faire tourner le dispositif de dispersion (DP) autour de son axe optique.

4. Dispositif selon l'une des revendications 1 à 3, caractérisé par le fait que les faisceaux laser de polarisation différente sont amenés au dispositif de dispersion (DP) en passant par un diviseur de faisceau selon la polarisation (PS) et par le fait que sur le chemin lumineux, derrière le second système de lentilles (L4) est disposé un autre diviseur de faisceaux selon la polarisation (PP) qui amène à deux câbles optiques (LLa), LLb) la lumière en provenance du volume de mesure (MV).

5. Dispositif selon l'une des revendications 1 à 4, caractérisé par le fait que l'entrée du dispositif de réception de la lumière (LAV), le second système de lentilles (L4), le dispositif de dispersion (DP) et le premier système de lentilles (L3) sont disposés, dans cet ordre, le long de l'axe optique.

6. Dispositif selon l'une des revendications 1 à 5, caractérisé par le fait que le second système de lentilles (L4) présente, à une certaine distance de l'axe optique, des ouvertures de passage pour des faisceaux de polarisation différente.

7. Dispositif selon la revendication 5 ou 6, caractérisé par le fait que les composants (L4,DP,L3) disposés le long de l'axe optique sont logés dans un boîtier (OK) qui peut tourner autour de l'axe optique.

8. Dispositif selon la revendication 5, caractérisé par le fait qu'un dispositif (L1,L2,P2) est prévu entre le second système de lentilles (L4) et le dispositif de dispersion (DP), pour réfléchir la lumière laser sur le chemin des faisceaux.

FIG. 1a

FIG. 1

FIG. 2

EP 0 260 385 B1

FIG. 3

FIG. 4

FIG. 5

FIG. 6